**Europäisches Patentamt**

**European Patent Office**

**Office européen des brevets**

(19)

(11) Veröffentlichungsnummer : **0 146 914**
**B1**

(12)

# EUROPÄISCHE PATENTSCHRIFT

(45) Veröffentlichungstag der Patentschrift :
**05.04.89**

(51) Int. Cl.⁴ : **A 47 C 20/04**

(21) Anmeldenummer : **84115781.1**

(22) Anmeldetag : **19.12.84**

(54) **Elektromotorischer Antrieb zum Verstellen des Kopf- oder Fusskeils eines Liegemöbels.**

(30) Priorität : **22.12.83 CH 6863/83**

(43) Veröffentlichungstag der Anmeldung :
**03.07.85 Patentblatt 85/27**

(45) Bekanntmachung des Hinweises auf die Patenterteilung : **05.04.89 Patentblatt 89/14**

(84) Benannte Vertragsstaaten :
**AT BE CH DE FR GB IT LI LU NL SE**

(56) Entgegenhaltungen :
**CH--A-- 615 333**
**FR--A-- 1 439 800**
**FR--A-- 2 351 629**

(73) Patentinhaber : **Magnetic Elektromotoren A.G. Liestal**
**Oristalstrasse 97**
**CH-4410 Liestal (CH)**

(72) Erfinder : **Salathé, Joseph**
**Hauptstrasse 55**
**CH-4411 Seltisberg (CH)**

(74) Vertreter : **Blum, Rudolf Emil Ernst et al**
**c/o E. Blum & Co Patentanwälte Vorderberg 11**
**CH-8044 Zürich (CH)**

EP 0 146 914 B1

## Beschreibung

Die vorliegende Erfindung betrifft einen elektromotorischen Antrieb zum Verstellen des Kopf- oder Fusskeils eines Liegemöbels, welcher Antrieb einen Elektromotor aufweist, der über eine Schnecke ein Schneckenrad treibt, das seinerseits mit einer Gewindespindel antriebsverbunden ist, die in ein Schubrohr eingreift, derart, dass eine Rotationsbewegung des Elektromotors in eine lineare Bewegung des Schubrohres umgesetzt ist.

Zum elektromotorischen Verstellen eines Kopf- oder Fusskeils eines Liegemöbels wird üblicherweise ein sogenannter Linearantrieb verwendet. Dieser weist einen Schubund Zugmotor auf, welcher mit dem Liegemöbel-Rahmen fest verbunden ist und eine linear verschiebbare Stange aufweist, welche üblicherweise über ein Gestänge mit dem zu verstellenden Teil verbunden ist. Dabei wird die Verstellbewegung über manuell zu betätigende Steuerorgane gesteuert. Bei den bekannten Antrieben ist eine Zwangsverbindung zwischen dem zu verstellenden Teil und dem Antriebsmotor vorhanden. Damit besteht die Gefahr, dass während des Betriebs der gesamten Verstellvorrichtung eine Person durch Unaufmerksamkeit beim Absenken des verstellbaren Liegemöbelkeiles Körperteile zwischen dem festen Liegemöbel-Rahmen und dem Liegemöbelkeil einklemmen kann.

Ziel der Erfindung ist, den angeführten Nachteil zu beheben.

Der erfindungsgemässe elektromotorische Antrieb ist durch die Merkmale des Patentanspruches 1 gekennzeichnet.

Nachfolgend wird der Erfindungsgegenstand anhand der Zeichnungen beispielsweise näher erläutert.

Es zeigt :

Fig. 1 einen ersten beispielsweisen Einsatz einer Verstellvorrichtung mit elektromotorischem Antrieb,

Fig. 2 einen weiteren Einsatz einer Verstellvorrichtung mit elektromotorischen Antrieb,

Fig. 3 einen Schnitt durch eine Ausführung eines elektromotorischen Antriebes,

Fig. 4 die zwei Arbeitsstellungen des in der Fig.3 gezeigten elektromotorischen Antriebs,

Fig. 5 eine der Fig. 4 gleichenden Darstellung einer weiteren Ausführung des elektromotorischen Antriebes, und

Fig. 6 eine Einzelheit des elektromotorischen Antriebes der vorgängigen Ausführungen.

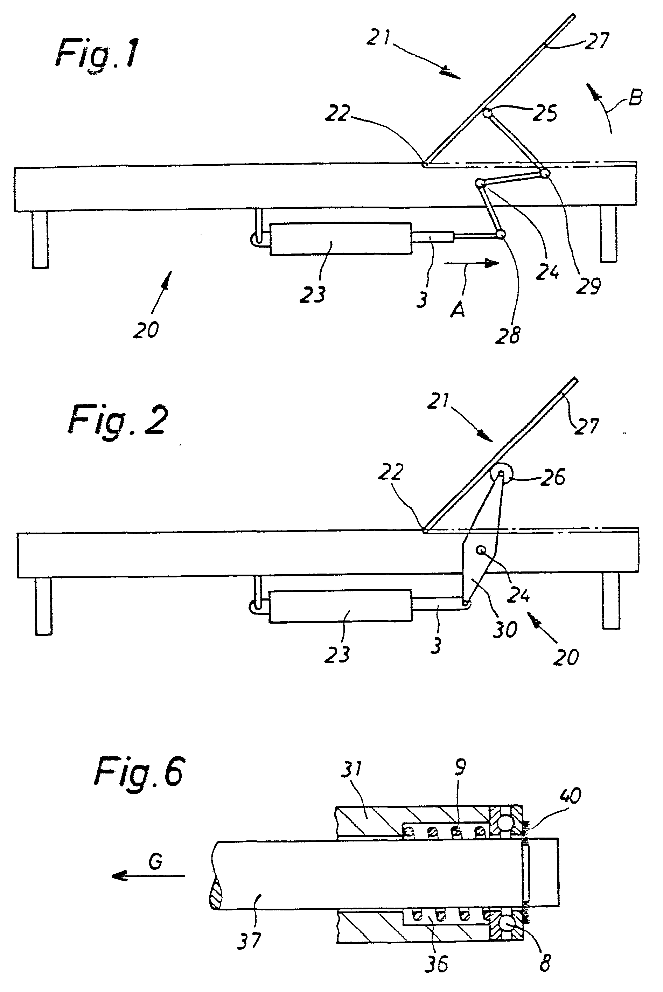

In der Fig. 1 ist ein Liegemöbel-Rahmen allgemein mit der Bezugsziffer 20 bezeichnet. Dieses Liegemöbel weist einen verstellbaren Kopfkeil 21 auf. Dieser Kopfkeil 21 ist bei einer Schwenkstelle 22 angelenkt. Die Bezugsziffer 23 bezeichnet den elektromotorischen Antrieb, ein Linearantrieb. Der Antrieb weist eine Schub- bzw. Zugstange 3 auf, die auch als Schubrohr bezeichnet wird. Dieses Schubrohr 3 ist über eine Gestängeanordnung mit einem Drehpunkt 24 bei 25 am zu verschwenkenden Rahmenteil 27 angelenkt. Die Bezugsziffern 28 und 29 bezeichnen weitere, nicht ortsfeste Anlenkstellen der einzelnen Gestängeglieder. Bewegt sich das Schubrohr in Richtung des Pfeiles A, wird der schwenkbare Rahmenteil 27 in Richtung des Pfeiles B um die Schwenkstelle 22 geschwenkt. Bewegt sich das Schubrohr in der zu A entgegengesetzter Richtung, wird der Rahmenteil 27 heruntergeschwenkt. Es ist nun offensichtlich, dass eine Person, beispielsweise spielende Kinder beim Herunterschwenken des Rahmenteils 27 ein Körperglied zwischen diesem und dem feststehenden Rahmenteil einklemmen können und damit besteht eine erhebliche Verletzungsgefahr.

Eine weitere Ausführung ist in der Fig. 2 gezeigt. Hier ist der mit dem Liegemöbel-Rahmen 20 fest verbundene elektromotorische Antrieb 23 mit seinem Schub- bzw. Druckrohr 3 über einen beim Drehpunkt 24 gelagerten Schwenkarm 30 mit Rollen 26 verbunden. Der schwenkbare Rahmenteil 27 liegt auf diesen Rollen 26 auf. Diese Rollen 26 können in einer (nicht gezeigten) Schiene geführt sein, so dass auch hier der Rahmenteil 27 in beiden Drehsinnen zwangsweise geführt ist. Alternativ kann der Schwenkteil 27 lose auf den Rollen 26 aufliegen, so dass die im Uhrzeigersinn erfolgende Schwenkbewegung desselben bei sich senkenden Rollen 26 lediglich durch Einwirkung der Schwerkraft erfolgt. Auch hier ist ersichtlich, dass eine Person bei sich absenkendem Rahmenteil 27 zwischen demselben und dem feststehenden Rahmenteil einklemmen kann.

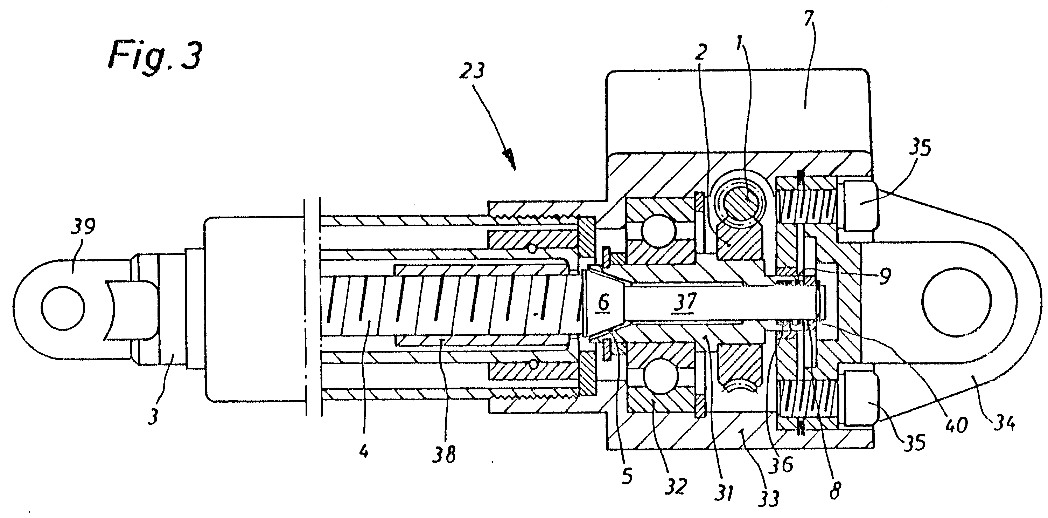

Es wird nun auf die Fig. 3 verwiesen, in welcher eine Schnittansicht einer Ausführung des elektromotorischen Antriebes dargestellt ist. Der Elektromotor ist allgemein mit der Bezugsziffer 7 bezeichnet. Die Welle des Elektromotors 7 ist mit einer Schnecke 1 verbunden. Diese Schnecke 1 kämmt mit einem Schneckenrad 2. Dieses Schneckenrad ist auf einer Hülse 31 angeordnet. Die Hülse 31 ist über ein Wälzlager 32 im Gehäuse 33 abgestützt. Eine Lasche 34 ist über Kopfschrauben 35 mit dem Gehäuse 33 verbunden. Der Antrieb wird über diese Lasche 34 mit dem jeweiligen Liegemöbel-Rahmen verbunden. Beim in der Fig. 3 rechts liegenden Ende ist bei der Hülse 31 ein Ringraum 36 ausgebildet, in welchem eine als Rückstellfeder dienende Schraubendruckfeder 9 angeordnet ist. Die Hülse 31 ist von einer Stummelwelle 37 durchsetzt, welche mit einer Spindel 4 drehfest verbunden ist. Zwischen der Stummelwelle 37 und der Spindel 4 ist ein Kegelstumpf 6 ausgebildet, welcher Kegelstumpf 6 eine Kupplungshälfte bildet. Bei der gleichen Stelle weist die Hülse 31 einen den Kegelstumpf 6 übergreifenden hohlkegelstumpfförmigen Abschnitt 5 auf, welcher die zweite Kupplungshälfte bildet. Die Spindel 4 verläuft in einer mit einem Innengewinde versehenen Hülse 38, über welche beim Drehen der Spindel 4 das sogenannte Schubrohr 3 linear verschoben wird. Die Uebertragungsglieder, welche die vom Schubrohr durchgeführte lineare Bewegung auf den zu verstellenden Rahmenteil übertragen, sind an der Lasche 39 angelenkt.

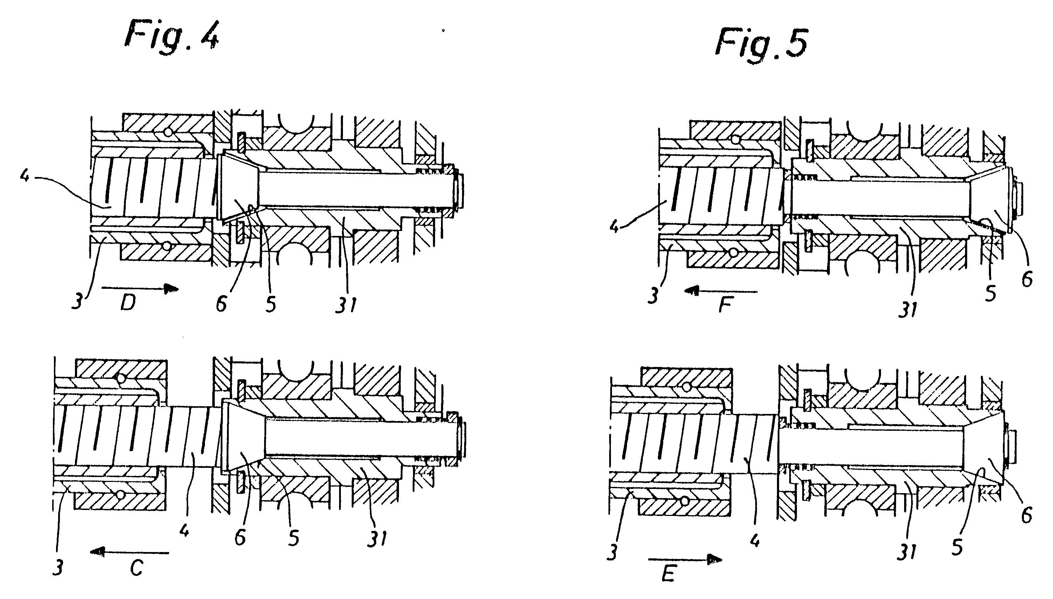

Es wird nun Bezug auf die Fig. 4 genommen, in welcher ein Teil der Schnittdarstellung der Fig. 3 wiedergegeben ist. Der Antrieb ist derart ausgebildet, dass er bei der sogenannten Arbeit auf Druck eine Sicherung auf Zug aufweist. Zur Erklärung dazu wird Bezug auf die Fig. 1 genommen. Um den Rahmenteil 27, also den Kopfteil 21 anzuheben, muss das Schubrohr 3 einen Druck ausüben. Zum Aufschwenken des Rahmenteils 27 wird daher das Schubrohr 3 durch die Rotation der Spindel 4 in Richtung des Pfeiles C der unteren Darstellung der Fig. 4 gedrückt. Es stellt sich somit eine Gegenkraft ein, wie dies aus den in den Fig. 1 und 2 gezeigten Anordnungen dem Fachmann offensichtlich ist, welche Gegenkraft bewirkt, dass der mit der Spindel 4 verbundene Kegelstumpf 6 gegen den hohlkegelstumpfförmigen Abschnitt 5 der Hülse 31 gepresst wird. Somit sind die Kupplungshälften 5 und 6 im Reibeingriff.

Es soll nun der Rahmenteil 27 der Fig. 1 oder 2 hinuntergeklappt werden. Dazu wird die Drehrichtung der Spindel 4 beispielsweise durch Polumschaltung des Motors 7 gewechselt. Die Spindel beginnt nun das Schubrohr 3 aus der in der Fig. 4 ersichtlichen unteren Stellung, bei der das stirnseitige, dem Schneckenrad 2 zugekehrte Ende des Schubrohres 3 vom Gehäuse des Motors bzw. des Schneckengetriebes einen Abstand aufweist gegen die in der Fig. 4 oben gezeigte Stellung zurückzuziehen. Wird nun dem Rahmenteil 27 ein Widerstand entgegengesetzt, indem beispielsweise eine Person ein Gliedmass unter dem Rahmenteil 27 einklemmt, tritt beim Schubrohr und somit bei der Spindel 4 eine Zugkraft auf. Damit hebt sich der Kegelstumpf 6 vom hohlkegelstumpfförmigen Abschnitt 5 ab, so dass ein kleiner Zwischenraum zwischen deren konischen Flächen entsteht und damit wird der Reibeingriff zwischen diesen zwei Kupplungshälften aufgehoben. Damit wird sich der Rahmenteil 27 nicht mehr weiter nach unten schwenken, obwohl der Motor 7 weiter treibt. Damit wird der eingeklemmte Körperteil nicht verletzt.

Es wird nun auf die Fig. 5 verwiesen. Diese Figur zeigt eine im Vergleich mit der Fig. 4 umgekehrte Anordnung, indem bei der Ausführung nach der Fig. 5 der Antrieb auf Zug arbeitet und die Sicherung auf Druck anspricht. Das heisst, dass z. B. in der heruntergeklappten Stellung des Rahmenteiles 27 das Schubrohr 3 den im unteren Teil der Fig. 5 gezeigten Abstand vom Motor- und Getriebegehäuse aufweist. Zum Aufklappen des Rahmenteils 27 wird das Schubrohr 3 in Richtung des Pfeiles E gezogen. Es stellt sich somit auch hier wieder eine Gegenkraft ein, so dass der Kugelstumpf 6 gegen den hohlkegelstumpfförmigen Abschnitt 5 in einen Reibeingriff gezogen wird. Wird nun der Drehsinn der Spindel 4 gewechselt, um den Rahmenteil 27 herunterzuschwenken, beginnt sich das Schubrohr 3 aus der im oberen Teil der Fig. 5 gezeigten Stellung in Richtung des Pfeiles F zu bewegen. Wird nun bei der in der Richtung des Pfeiles F erfolgenden Bewegung des Schubrohres 3 ein Widerstand auftreten, entsteht eine Druckeinwirkung auf das Schubrohr 3 und die Spindel 4 und damit hebt sich der Kegelstumpf 6 vom hohlkegelstumpfförmigen Abschnitt 5 auf und die Kupplung ist gelöst. Damit wird eine weitere Bewegung des Schubrohres 3 unterbrochen.

Es wird nun auf die Fig. 6 verwiesen. In dieser Figur ist der die Schraubendruckfeder 9 enthaltende Abschnitt des Antriebs gemäss der Fig. 3 in vergrössertem Massstab dargestellt. Insbesondere ist der Teil der Stummelwelle 37 gezeichnet, der den die Schraubendruckfeder 9 enthaltenden Abschnitt der Hülse 31 durchsetzt. Die Schraubendruckfeder 9 ist in einem Ringraum 36 der Hülse 31 angeordnet. Zwischen dem stirnseitigen Ende der Hülse 31 und einem in der Stummelwelle 37 sitzenden Sprengring 40 ist ein Drucklager 8 angeordnet, hier ein Wälzlager, d. h. ein Kugellager. Der eine Laufring desselben liegt an der Hülse 31 an und der andere Laufring liegt am Sprengring 40 an. Das Drucklager 8 kann lose eingesetzt sein. Die Schraubendruckfeder 9 drückt gegen das Drucklager 8 und bewirkt die Ausübung eines Druckes auf den Sprengring 40. Das heisst, dass (siehe Figur) die zwei Kupplungshälften, nämlich Kegelstumpf 6 und hohlkegelstumpfförmiger-Abschnitt 5 unter leichter Druckausübung aneinander anliegen. Dieses stellt sicher, dass auch dann ein Reibeingriff zwischen den zwei genannten Kupplungshälften vorhanden ist, wenn der Drehsinn der Spindel 4 derart ist, dass sich bei Auftreten eines Widerstandes die Kupplung löst. Es ist offendichtlich, dass auch in dieser genannten Arbeitsrichtung kleine Reibwiderstände aufgrund der Gestängelagerungen, der Schwenklagerung des schwenkbaren Rahmenteils 27 überwunden werden müssen.

Stellt sich nun der gehemmte Betriebszustand ein, bei dem die Kupplung gelöst wird, welcher Zustand beispielsweise in den Figuren 3 und 4 oben dargestellt ist, hat sich die Stummelwelle 37 in Richtung des Pfeiles G der Figur 6 nach links bewegt. Damit liegt der Sprengring 40 satt am Drucklager 8 an dieses seinerseits satt an der Hülse 31 an. Damit ist die Rotation des Schneckenrades 2 und somit des Motors 7 auch im Leerlauf abgesichert.

**Patentansprüche**

1. Elektromotorischer Antrieb zum Verstellen des Kopf- oder Fusskeils eines Liegemöbels, welcher Antrieb einen Elektromotor (7) aufweist, der über eine Schnecke (1) ein Schneckenrad (2) treibt, das seinerseits mit einer Gewindespindel (4) antriebsverbunden ist, die in ein Schubrohr (3) eingreift, derart, dass eine Rotationsbewegung des Elektromotors (7) in eine lineare Bewegung des Schubrohrs (3) umgesetzt ist, dadurch gekennzeichnet, dass zwischen dem Schneckenrad (2) und der Gewindespindel (4) eine lösbare Kupplung (5, 6) angeordnet ist, welche beim Auftreten einer in Axialrichtung der Gewindespindel (4) gerichteten Kraft einer festgelegten Wirkrichtung, deren Wert grösser als ein festgelegter Wert ist, die Antriebsverbindung zwischen dem Schneckenrad (2) und der Gewindespindel (4) löst.

2. Antrieb nach Anspruch 1, dadurch gekennzeichnet, dass der eine Teil der Kupplung (5, 6) ein mit der Spindel (4) drehfest verbundenen Kegelstumpf (6) und der andere Teil ein den Kegelstumpf (6) übergreifenden hohlkegelstumpfförmigen Abschnitt (5) einer mit dem Schneckenrad (2) drehfest verbundenen Hülse (31) ist, und dass zwischen der Spindel (4) und der Hülse (31) eine Rückstellfeder (9) vorhanden ist, die den Kegelstumpf (6) in Eingriff mit dem hohlkegelstumpfförmigen Abschnitt (6) spannt.

3. Antrieb nach Anspruch 2, dadurch gekennzeichnet, dass zwischen der Spindel (4) und der Hülse ein Drucklager (8) angeordnet ist, welches bei ausgerückter Kupplung (5, 6) die Spindel (4) gegenüber der Hülse (31) axial führt.

**Claims**

1. Electromotive drive for adjusting the head and foot support of lying furniture, which drive includes an electric motor (7) driving a worm (1) via a worm gear (2) operatively connected with a threaded spindle (4) on its part, which engages into a push rod (3) such that a rotary motion of the electric motor (7) is converted into a linear motion of the push rod (3), characterized in that a cutoff coupling (5, 6) is disposed between the worm gear (2) and the threaded spindle (4), which coupling disengages the operative connection between worm gear (2) and threaded spindle (4) by the occurring of a force of a predetermined direction of operation directed in axial direction of the threaded spindle (4) and having a predetermined direction of operation, and the value of which is higher than a predetermined value.

2. Drive of claim 1, characterized in that one part of the coupling (5, 6) is a truncated cone (6) secured to spindle (4) for rotation therewith and the other part is a portion (5) in form of hollow frustum of a sleeve (31) secured to worm wheel (2) for rotation therewith, in which portion the truncated cone (6) is received and that a return spring (9) is located between the spindle (4) and the sleeve (31) biasing the truncated cone into engagement with the portion in form of a hollow frustum.

3. Drive according to claim 2, characterized in that a thrust bearing (8) is disposed between spindle (4) and sleeve, which bearing guides the spindle (4) compared with the sleeve with disengaged coupling.

**Revendications**

1. Commande électromotrice pour le réglage du support de tête ou de pied d'un meuble de couchage, laquelle commande comprend un moteur électrique (7) qui entraîne une roue à denture hélicoïdale (2) par l'intermédiaire d'une vis sans fin (1), cette roue étant accouplée à une broche filetée (4) qui s'engrène dans un tube d'arbre de transmission (3) de manière que le mouvement de rotation du moteur électrique (7) est transformé en un mouvement linéaire du tube d'arbre de transmission, caractérisée en ce qu'entre la roue à denture hélicoïdale (2) et la broche filetée (4) est agencé un accouplement (5, 6) amovible, lequel, lors de l'introduction d'une force dirigée dans la direction axiale de la broche filetée (4) d'une direction effective déterminée dont la valeur est supérieure à une valeur déterminée, la liaison d'entraînement entre la roue à denture hélicoïdale (2) et la tige filetée (4) se désolidarise.

2. Commande selon la revendication 1, caractérisée en ce qu'une partie de l'accouplement (5, 6) est un cône tronqué (6) relié de façon rigide en torsion à la broche (4) et l'autre partie est une section tronconique creuse surplombant le cône tronqué (6) d'une douille (31) reliée de façon rigide à la torsion avec la roue à denture hélicoïdale (2) et en ce qu'entre la broche (4) et la douille (31) est prévu un ressort de rappel (9) qui repousse en contact le cône tronqué (6) avec la section tronconique creuse (5).

3. Commande selon la revendication 2, caractérisée en ce qu'entre la broche (4) et la douille est agencé un palier de butée (8) qui lors de la désolidarisation de l'accouplement (5, 6) guide axialement la broche (4) en opposition à la douille (31).

Fig.1

Fig.2

Fig.6

*Fig. 3*

EP 0 146 914 B1

## Fig. 4

## Fig. 5

EP 0 146 914 B1